(19) Europäisches Patentamt
European Patent Office
Office européen des brevets

(11) **EP 2 009 326 B1**

(12) **EUROPEAN PATENT SPECIFICATION**

(45) Date of publication and mention
of the grant of the patent:
**26.10.2011 Bulletin 2011/43**

(51) Int Cl.:
***F16H 59/04*** *(2006.01)*

(21) Application number: **08011626.2**

(22) Date of filing: **26.06.2008**

(54) **Shift lever apparatus for vehicle**

Gangschaltungsvorrichtung für ein Fahrzeug

Appareil de levier de vitesse pour véhicule

(84) Designated Contracting States:
**DE FR GB**

(30) Priority: **28.06.2007 JP 2007171050**

(43) Date of publication of application:
**31.12.2008 Bulletin 2009/01**

(73) Proprietor: **Delta Kogyo Co., Ltd.**
**Aki-gun,**
**Hiroshima 735-8501 (JP)**

(72) Inventors:
• **Takatani, Ikuo**
**Aki-gun, Hiroshima 735-8501 (JP)**

• **Kusayama, Takumi**
**Aki-gun, Hiroshima 735-8501 (JP)**

(74) Representative: **Schiuma, Daniele Wolfgang et al**
**Müller-Boré & Partner**
**Grafinger Strasse 2**
**81671 München (DE)**

(56) References cited:
**JP-A- 7 332 476      JP-A- 62 273 132**
**JP-A- 2003 118 412      JP-A- 2006 062 497**

**Description**

BACKGROUND OF THE INVENTION

1. Field of the Invention

The present invention relates to a shift lever apparatus for a vehicle, which comprises a shift lever adapted to be manually tilted in longitudinal and lateral directions of the vehicle in order to effect a gear-shifting operation in a transmission mounted on the vehicle, wherein the shift lever apparatus is adapted to be provided in a vicinity of a driver's seat of the vehicle.

2. Background Art

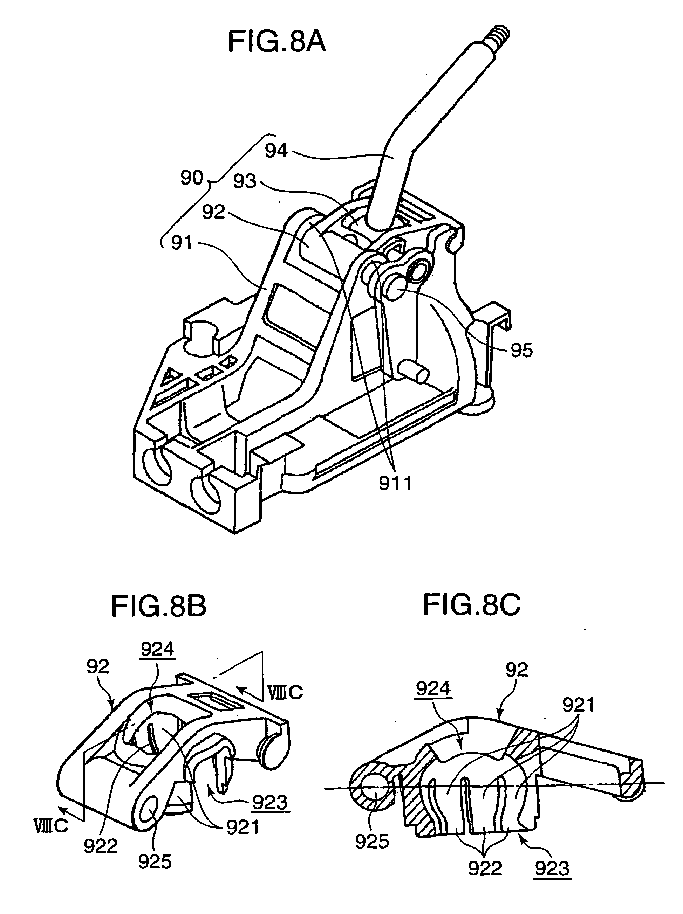

Heretofore, as a shift lever apparatus for a vehicle, there has been known one type, as disclosed in JP 07-332476A and illustrated in FIGS. 8A to 8C. FIGS. 8A to 8C illustrate a shift lever apparatus 90 as one example of the conventional type, wherein FIG. 8A is a general perspective view of the shift lever apparatus 90, and FIG. 8B and FIG. 8C are a perspective view of a ball seat 92 (resin body 1 in JP 07-332476A) in the shift lever apparatus 90, and a sectional view taken along the line VIIIC-VIIIC in FIG. 8B, respectively.

As shown in FIG. 8A, the shift lever apparatus 90 comprises a base member 91 adapted to be attached onto a floor of a vehicle at a desired position, a ball seat 92 adapted to be mounted to a top of the base member 91, a ball portion 93 (large sphere portion 6 in JP 07-332476A) adapted to be supported by the ball seat 92 rotatably in longitudinal (i.e., frontward-rearward) and lateral (i.e., rightward-leftward) directions of the vehicle, and a shift lever 94 provided to protrude radially upwardly from an upper surface of the ball portion 93.

As shown in FIG. 8B, the ball seat 92 has a plurality of embracing pieces 921 each having an inner surface formed as an arc-shaped surface adapted to be in sliding contact with an outer surface of the ball portion 93. The embracing pieces 921 are arranged such that a slit 922 is defined between respective adjacent ones thereof, in the form of a cutout extending upwardly from a lower edge of the ball seat 92. The lower edge of the ball seat 92 defines a lower opening 923 having a diameter dimension slightly less than that of the ball portion 93, and an upper portion of the ball seat 92 is formed with an upper opening 924 having a diameter dimension slightly less than that of the ball portion 93. The lower opening 923 serves as an inlet for use in mounting the ball portion 93 into the ball seat 92. The upper opening 924 serves as a means to allow the shift lever 94 to protrude upwardly from the ball seat 92 in a state after the ball portion 93 is mounted in the ball seat 92.

In an assembling job for the above shift lever apparatus 90, the shift lever 94 is inserted from the lower opening 923 to penetrate the upper opening 924, and then the ball portion 93 is forcedly pushed into the ball seat 92. During the push-in process, each of the embracing pieces 921 is elastically deformed outwardly to expand the diameter of the lower opening 923 according to broadening of the slits 922, and then returned to its original configuration. Thus, the ball portion 93 is embraced by the embracing pieces 921 in sliding contact relation with respective inner surfaces thereof.

In a state after the ball portion 93 is mounted in the ball seat 92, the ball portion 93 is pressed by a moderate pressing force from the surrounding embracing pieces 921, so that the shift lever 94 can be manually operated while maintaining a moderate operational resistance.

As above, the slits 922 each defined between the adjacent embracing pieces 921 can provide improved efficiency in assembling the ball portion 93 to the ball seat 92. In addition, even if there is a certain level of dimensional variation in the ball seat 92 and/or the ball portion 93, the broadening of the slits 922 can absorb the variation while reliably maintaining adequate operability of the shift lever 94.

In the shift lever apparatus 90 disclosed in JP 07-332476A, each of the embracing pieces 921 constituting the ball seat 92 is simply formed to extend downwardly from a support portion for supporting the ball seat 92. Thus, for example, when the shift lever 94 is manually tilted by an excessively large force, a part of the embracing pieces 921 on the side opposite to a direction of the tilting is likely to receive a large force pressing them outwardly to cause undesirable elastic deformation thereof in an outward direction.

Specifically, the elastic deformation of the embracing pieces 921 causes deterioration in operability of the shift lever 94 due to difficulty in obtaining a desirable click or detent feeling of the shift lever 94, and leads to damage of the ball seat 92.

JP 2003 118412 A which is considered as the closest prior art discloses a shift lever structure for a manual transmission of a vehicle provided with a retainer installed in the vehicle side and having an assembling hole a shift lever set in a reverse position of a select position with a pushing operation, and an energizing spring. The structure is further provided with a spring engagement part in the retainer and a spring presser ring retained by being engaged with the spring engagement of the retainer. The spring presser ring abuts on the energizing spring accumulating a spring force so as to prevent projection of the energizing spring accumulating the spring force.

SUMMARY OF THE INVENTION

It is an object of the present invention to provide a shift lever apparatus for a vehicle, capable of solving the above problems.

It is another object of the present invention to provide a shift lever apparatus for a vehicle, capable of ensuring adequate efficiency in assembling a ball portion to a base member, and adequate operability of a shift lever in an assembled state of the shift lever apparatus.

In order to achieve the above objects, according to one aspect of the present invention, there is provided a shift lever apparatus for a vehicle comprising: a base plate (30) adapted to be fixed to a vehicle body (12); a ball-mounting cylinder (34) formed on a top of said base plate (30) to have an upper opening; a ball seat (40) adapted to be mounted in said ball-mounting cylinder (34) via said upper opening; a ball portion (51) adapted to be mounted in said ball seat (40); a lever shaft (54) erected to extend radially from said ball portion (51); an upper support (60) adapted to retain said ball portion (51) through said ball seat (40) while being mounted to an upper edge portion (37) of said ball-mounting cylinder (34); a plurality of embracing pieces (42) formed in said ball seat (40), said embracing pieces (42) arranged in adjacent relation to each other with a given slit (424) therebetween, each of said embracing pieces (42) having a concavedly curved inner surface conforming to an outer surface of said ball portion (51); and deformation restriction means adapted to restrict deformation of said embracing pieces (42), wherein said deformation restriction means includes a reinforcing first rib (423) formed on an outer surface of each of said embracing pieces (42) to extend in parallel relation to said slit (424).

BRIEF DESCRIPTION OF THE DRAWINGS

FIG. 1 is a partially cut-away perspective view showing one example of an in-vehicle arrangement of a shift lever apparatus for a vehicle, according to one embodiment of the present invention.
FIG. 2 is an exploded perspective view showing the shift lever apparatus according to the embodiment.
FIG. 3 is a perspective view of the shift lever apparatus illustrated in FIG. 2, in an assembled state.
FIG. 4 is a sectional view taken along the line IV-IV in FIG. 3.
FIGS. 5A and 5B illustrate one example of an upper support, wherein FIG. 5A is a partially cut-away perspective view of the upper support when viewed obliquely from thereabove, and FIG. 5B is a perspective view of the upper support when viewed obliquely from therebelow.
FIGS. 6A and 6B are explanatory top plan sectional views showing a positional relationship between respective lock protrusions of a base plate and the upper support, in an easy-to-understand manner, wherein FIG. 6A shows a state just before the lock protrusions are brought into engagement with each other, and FIG. 6B shows a state after the lock protrusions are brought into engagement with each other.
FIGS. 7A and 7B are explanatory diagrams showing a function of a retaining rib, wherein FIG. 7A shows a state when a lever shaft is set at a neutral position, and FIG. 7B shows a state after the lever shaft is tilted frontwardly.
FIGS. 8A to 8C illustrate one example of a conventional shift lever apparatus, wherein FIG. 8A is a general perspective view of the conventional shift lever apparatus, and FIG. 8B and FIG. 8C are a perspective view of a ball seat in the conventional shift lever apparatus, and a sectional view taken along the line VIIIC-VIIIC in FIG. 8B, respectively.

DETAILED DESCRIPTION OF THE PREFERRED EMBODIMENTS OF THE INVENTION

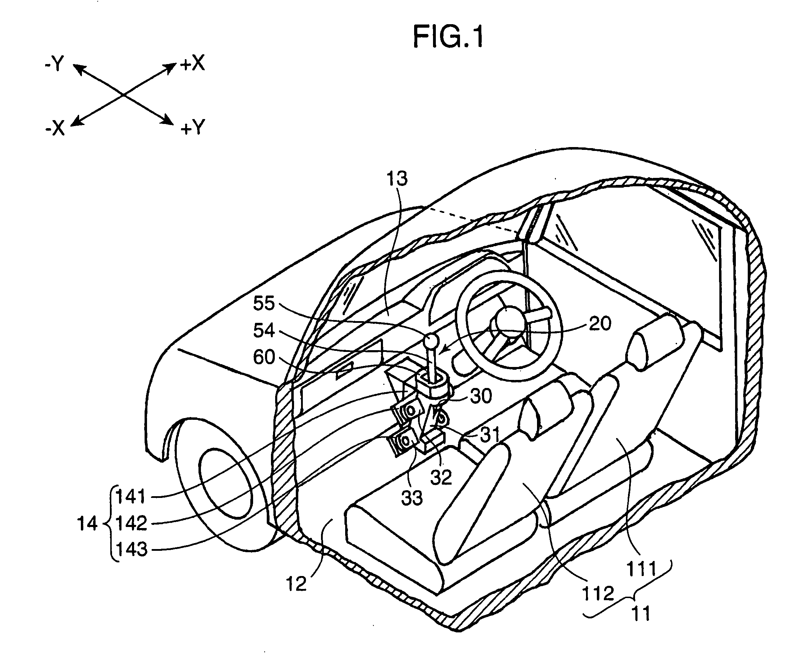

With reference to the drawings, the present invention will now be described based on one embodiment thereof. FIG. 1 is a partially cut-away perspective view showing one example of an in-vehicle arrangement of a shift lever apparatus for a vehicle, according to one embodiment of the present invention. In FIG. 1, the X-X direction and the Y-Y direction will be referred to respectively as "lateral (i.e., rightward-leftward) direction" and "longitudinal (i.e., frontward-rearward) direction". In particular, the - X direction, the + X direction, the - Y direction and the + Y direction will be referred to respectively as "leftward direction", "rightward direction", "frontward direction" and "rearward direction".

As a shift lever apparatus 20 according to one embodiment of the present invention, FIG 1 shows a so-called "manual shifter" for manually performing a gear-shifting operation using a lever. It should be noted that the present invention is not limited to the so-called "manual shifter" for manually performing both a gear-selecting operation and a gear-shifting operation, but may be applied to a so-called "automatic shifter" for manually performing only a range-selecting operation, wherein a gear-shifting operation is automatically performed.

As shown in FIG. 1, the shift lever apparatus 20 is adapted to be mounted on a floor (vehicle body) 12 in a passenger compartment of a vehicle 10 at a position slightly in front of a front seat 11 consisting of a driver's seat 111 and a passenger's seat 112, and between the driver's seat 111 and the passenger's seat 112. Further, a lever-apparatus support frame 14 is provided on the floor 12 at a position below a dashboard 13, to support the shift lever apparatus 20.

The lever-apparatus support frame 14 comprises a plate-shaped standing frame 141 formed to have a given height dimension and provided on the floor 12 in a standing manner, a plate-shaped upper inclined frame 142 provided to protrude from an upper position of the plate-shaped standing frame 141 obliquely downwardly in the rearward direction, and a plate-shaped lower inclined frame 143 provided to protrude from a lower position of the plate-shaped standing frame 141 in parallel opposed relation to the upper inclined frame 142.

The upper inclined frame 142 is designed to allow after-mentioned upper bolt seats 32 of the shift lever apparatus 20 to be fixedly fastened thereto by means of bolting. The lower inclined frame 143 is designed to allow after-mentioned lower bolt seats 33 of the shift lever apparatus 20 to be fixedly fastened thereto by means of bolting.

An installation position and installation dimensions of the shift lever apparatus 20 in a state after being fixedly supported by the lever-apparatus support frame 14 are set to allow a palm of a left hand of a driver seated in the driver's seat 111 to naturally reach to an after-mentioned operation knob 55 at an upper end of an after-mentioned lever shaft (shift lever) 54, when the driver stretches the left hand.

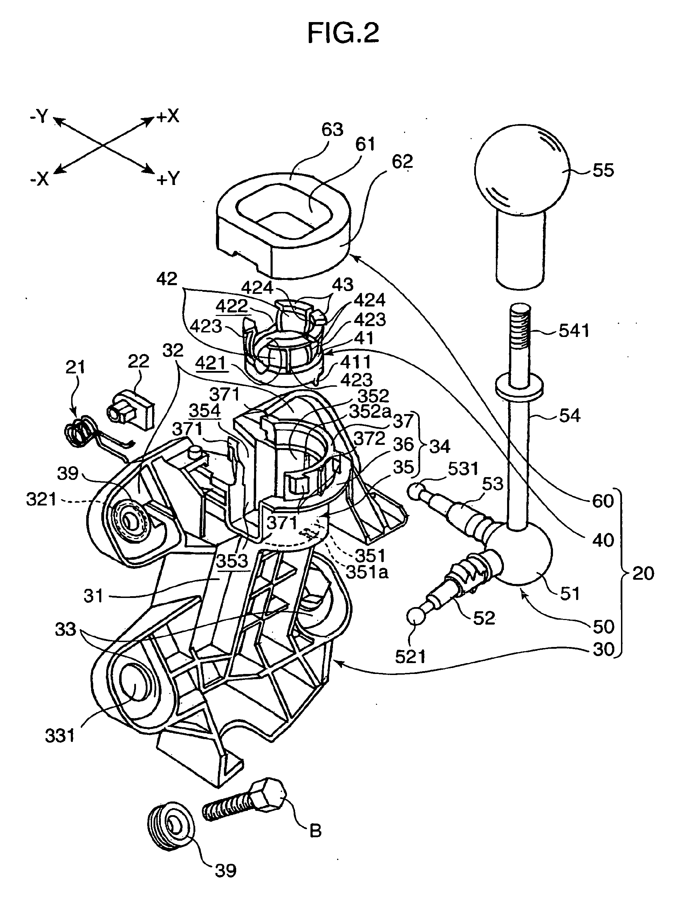

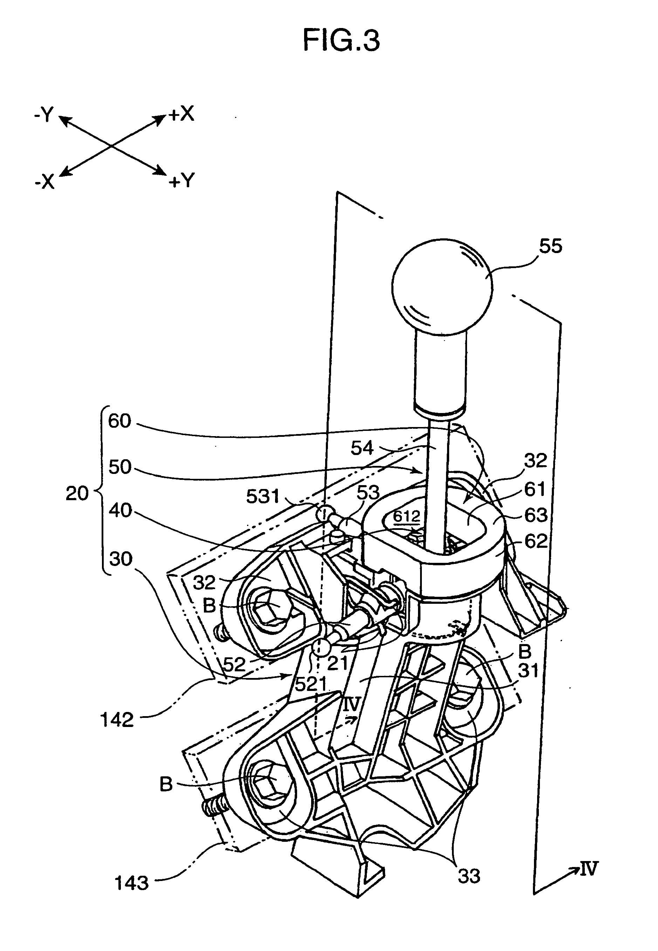

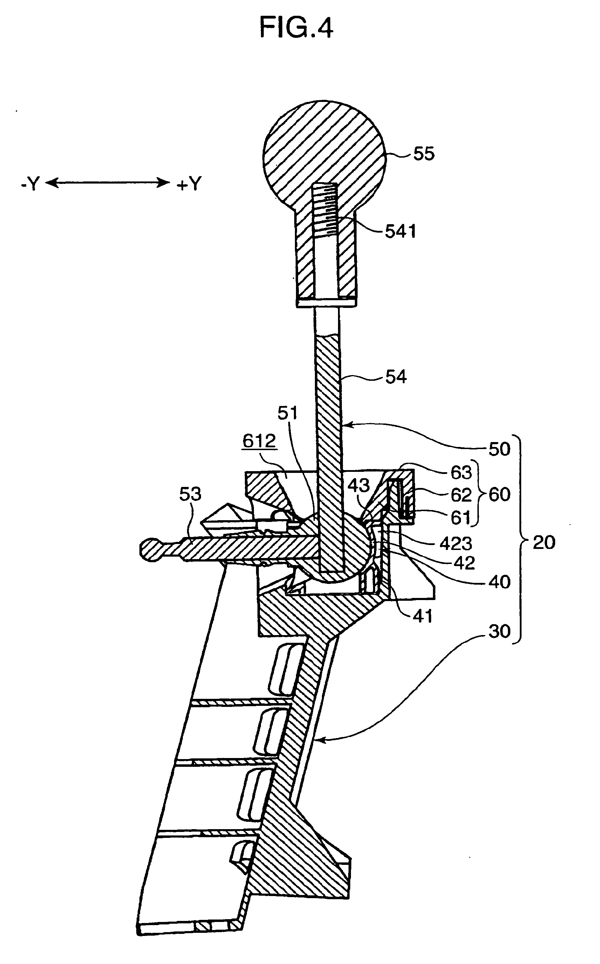

FIG. 2 is an exploded perspective view showing the shift lever apparatus 20 according to the embodiment. FIG. 3 is a perspective view of the shift lever apparatus 20 in an assembled state, and FIG. 4 is a sectional view taken along the line IV-IV in FIG. 3. In FIGS. 2 to 4, the directions indicated by X and Y are defined in the same manner as that in FIG. 1 [i.e., X-X: lateral direction (- X: leftward direction, + X: rightward direction), and Y-Y: longitudinal direction (- Y: frontward direction, + Y: rearward direction)]. In FIGS. 2 and 3, a recess and a hole provided in each of the following components to facilitate reduction in weight, and a die-releasing hole formed during an injection molding process, are omitted.

As shown in FIG. 2, the shift lever apparatus 20 fundamentally comprises a base plate 30 made of a hard synthetic resin and formed to be long in an upward-downward (i.e., heightwise) direction, a ball seat 40 adapted to be mounted to an upper portion of the base plate 30, a lever member 50 adapted to be supported by the ball seat 40, and an upper support 60 adapted to be attached to a top of the base plate 30. The upper support 60 is designed to stabilize a supported state of the lever member 50 relative to the ball seat 40.

The lever member 50 is constantly biased against a laterally tilting operation by a biasing force of a coil spring 21 in such a manner as to be returned to a neutral position. Specifically, as shown in FIG. 3, the coil spring 21 is mounted to the base plate 30 at a desired position while being supported by a spring support member 22 (see FIG. 2). When a driver releases the lever member 50 after the laterally tilting operation, the lever member 50 will be returned to the original upstanding neutral position (see FIG. 3) according to the biasing force of the coil spring 21.

The base plate 30 includes a rectangular column 31 having a heightwise-long rectangular-parallelepiped shape in external appearance, a pair of upper bolt seats 32 each formed to protrude from an upper portion of the rectangular column 31 in the lateral direction, a pair of lower bolt seats 33 each formed to protrude from an lower portion of the rectangular column 31 in the lateral direction, and a ball-mounting cylinder 34 formed on a top of the rectangular column 31. The ball-mounting cylinder 34 is adapted to allow an after-mentioned ball portion 51 of the lever member 50 to be mounted therein through the ball seat 40.

The upper and lower bolt seats 32, 33 are formed to extend obliquely upwardly in the frontward direction, in left side view (i.e., when viewed in the + X direction from the left side), correspondingly to the respective upper and lower inclined frames 142, 143 of the lever-apparatus support frame 14. The four bolt seats 32, 33 are formed with through-holes 321, 331, respectively. Further, each of the through-holes 321, 331 has an annular-shaped cushioning member 39 made of rubber and mounted thereto. A bolt B is inserted into the annular-shaped cushioning member 39 to penetrate a corresponding one of the upper and lower inclined frames 142, 143, and fastened by a nut (not shown). In this manner, the base plate 30 is fixed to the lever-apparatus support frame 14.

The ball-mounting cylinder 34 has a cylindrical-shaped cylinder body 35 formed to allow the ball seat 40 to be fitted thereinto, a flange 36 formed to protrude radially outwardly from an upper edge of the cylinder body 35, and an annular-shaped dam 37 formed to protrude upwardly from an upper surface of the flange 36 in concentric relation to the cylinder body 35. The upper support 60 is externally fitted on the annular-shaped dam 37.

The cylinder body 35 has a circular-shaped bottom plate 351, and a peripheral wall 352 erected from an outer peripheral edge of the bottom plate 351. The peripheral wall 352 has an inner diameter dimension set to be slightly greater than an outside dimension of the ball seat 40, and a heightwise dimension set to be slightly greater than that of the ball seat 40. The bottom plate 351 has a positioning hole 351a formed at a position corresponding to an after-mentioned positioning protrusion 411 of the ball seat 40. The peripheral wall 352 has a plurality of peripheral-wall ribs (a second rib) 352a formed on an inner peripheral surface thereof at positions corresponding to respective after-mentioned slits 424 of the ball seat 40, to extend in the heightwise direction.

The cylinder body 35 has a first cutout window 353 which resembles a cutout formed downwardly from a left region of the upper edge thereof, and a second cutout window 354 which resembles a cutout formed downwardly from a front region of the upper edge thereof. The first cutout window 353 is used for allowing passage of an after-mentioned first arm 52 provided to protrude leftwardly from a left region of the ball portion 51 of the lever member 50. The second cutout window 354 is used for allowing passage of an after-mentioned second arm 53 provided to protrude frontwardly from a front region of the ball portion 51.

The flange 36 is designed to receive the upper support 60 which is externally fitted onto the annular-shaped dam 37. Specifically, the flange 36 is adapted to receive a lower edge of the upper support 60 which is being fittingly moved downwardly, so as to block any further downward movement of the upper support 60. In addition, the flange 36 is formed to extend along an edge of each of the first and second cutout windows 353, 354. That is, each of the first and second cutout windows 353, 354 is edged with the flange 36.

The annular-shaped dam 37 has an inner diameter dimension set to be slightly greater than an outside dimension of the cylinder body 35. The annular-shaped dam 37 has four lock protrusions (a first lock protrusion) 371 formed on an upper region of an outer peripheral surface thereof. Each of the lock protrusions 371 on the side of the base plate 30 is formed to protrude outwardly from the outer peripheral surface of the annular-shaped dam 37, correspondingly to a respective one of after-mentioned lock protrusions 621 on the side of the upper support 60. The lock protrusions 371 of the annular-shaped dam 37 are not exactly arranged at even pitches in a circumferential direction, but in a substantially balanced manner.

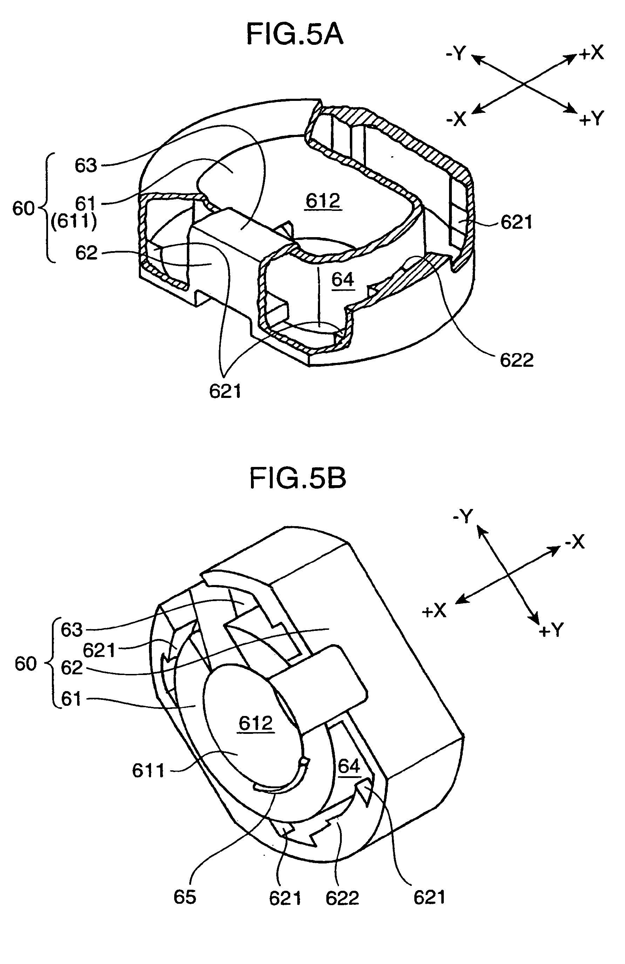

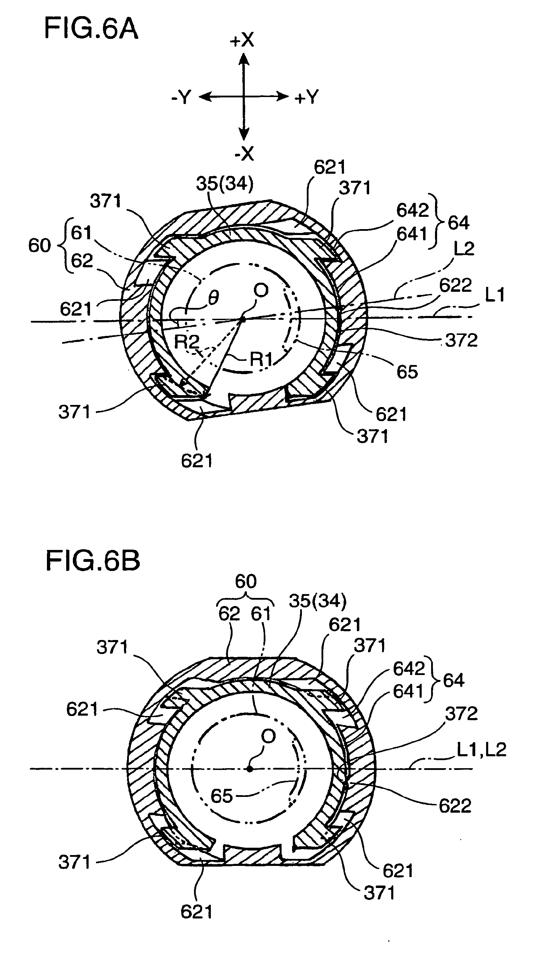

The annular-shaped dam 37 also has a lock raised-ridge 372 (see FIG. 2, FIG. 6A and 6B) formed on the outer peripheral surface thereof at a desired position to extend in the heightwise direction. The lock raised-ridge 372 of the annular-shaped dam 37 is formed to protrude outwardly from the outer peripheral surface of the annular-shaped dam 37, correspondingly to an after-mentioned lock raised-ridge 622 (see FIG. 5, FIGS. 6A and 6B) on the side of the upper support 60. When the upper support 60 is externally fitted onto the annular-shaped dam 37, and turned about an axis of the upper support 60, interference between the lock protrusions 371, 621 and between the lock raised-ridges 372, 622 will occur to cause elastic deformation in each of the annular-shaped dam 37 and the upper support 60 so as to stabilize a mounted state of the upper support 60 relative to the annular-shaped dam 37.

The ball seat 40 is designed to support the ball portion 51 in an embracing manner in order to allow the lever member 50 to be manually tilted in the longitudinal direction and in the lateral direction (i.e., allow longitudinally and laterally tilting operations of the lever member 50). The ball seat 40 has a base ring 41, a plurality of embracing pieces 42 formed to protrude upwardly from an upper surface of the base ring 41 and adapted to support the ball portion 51 in an embracing manner, and a plurality of flange pieces 43 formed on respective tops of the embracing pieces 42. The ball portion 51 is supported by the embracing pieces 42 at a plurality of circumferential positions.

The base ring 41 has an outer diameter dimension set to be slightly less than the inner diameter dimension of the cylinder body 35 of the ball-mounting cylinder 34. This allows the base ring 41 to be mounted in the cylinder body 35 in sliding contact relation thereto. The base ring 41 has a positioning protrusion 411 formed on a bottom surface thereof. The positioning protrusion 411 is adapted to be fitted into the positioning hole 351a formed in the bottom plate 351 of the cylinder body 35. The ball seat 40 is circumferentially positioned in the cylinder body 35 by fitting the ball seat 40 into the cylinder body 35 while inserting the positioning protrusion 411 into the positioning hole 351a.

Each of the embracing pieces 42 has an inner surface formed as a spherically curved surface slidingly contactable with an outer surface of the ball portion 51. That is, the inner surface of each of the embracing pieces 42 is formed in a curved shape conforming to the outer surface of the ball portion 51, and the plurality of embracing pieces 42 are arranged to define a concave spherical-shaped inner surface conforming to a profile of the ball portion 51, in their entirety. The embracing piece 42 is not arranged in regions of the ball seat 40 corresponding to the first and second cutout windows 353, 354 of the cylinder body 35. Specifically, a first space 421 is defined in the region of the ball seat 40 corresponding to the first cutout window 353, to allow the first arm 52 to be inserted thereinto, and a second space 422 is defined in the region of the ball seat 40 corresponding to the second cutout window 354.

Although the embracing pieces 42 are provided in this embodiment in a number of five, the number of the embracing pieces 42 is not limited to five, but may be four or less or may be six or more.

Each of the embracing pieces 42 has a reinforcing rib (a first rib) 423 formed on an outer surface thereof to extend in the heightwise direction. Further, a slit 424 is defined between respective adjacent ones of the embracing pieces 42. The slit 424 extends between respective adjacent ones of the flange pieces 43. Each of the reinforcing ribs 423 is formed in a shape which gradually inclines radially outwardly in a direction oriented upwardly from an upper surface of an outer periphery of the base ring 41. Thus, when the ball seat 40 is fitted into the cylinder body 35 via the upper opening of the ball-mounting cylinder 34, each of the reinforcing ribs 423 interferes with an inner wall surface of the cylinder body 35. Then, due to interference with the cylinder body 35, each of the embracing pieces 42 is elastically deformed toward an axis of the ball seat 40 extending in the heightwise direction, to narrow each of the slits 424. In this state, the embracing pieces 42 embracingly supports the after-mentioned ball portion 51 of the lever member 50 received inside the ball seat 40.

When the ball seat 40 is mounted in the cylinder body 35, the peripheral-wall ribs (the second ribs) 352a of the peripheral wall 352 are fitted into the respective slits 424 defined between the embracing pieces 42. The peripheral-wall ribs 352a serve as slit-deformation restriction means adapted to restrict deformation of the embracing pieces 42 causing a change in width of each of the slits 424.

The lever member 50 comprises a ball portion 51 adapted to be fitted into the ball seat 40 and then mounted in the ball-mounting cylinder 34 of the base plate 30 in the fitted state, a first arm 52 provided to protrude leftwardly from the ball portion 51, a second arm 53 provided to protrude frontwardly from the ball portion 51, and a lever shaft 54 provided to protrude upwardly from the ball portion 51.

The ball portion 51 has a radius dimension set to be slightly less than a curvature radius of the inner surface of the embracing pieces 42 before being fitted into the cylinder body 35. When the ball seat 40 supporting the ball portion 51 is fitted into the cylinder body 35, and thereby each of the embracing pieces 42 is elastically deformed toward the axis of the ball seat 40, a supported state of the ball portion 51 relative to the embracing pieces 42 becomes more reliable. In this state, the ball portion 51 can be rotated in all directions.

The first and second arms 52, 53 are provided, respectively, with connection spheres 521, 531 at respective distal ends thereof. Each of the connection spheres 521, 531 is connected to a transmission (not shown) through a connection member and a wire (not shown). Thus, when the lever shaft 54 is manually moved, the movement is transmitted to the transmission through the connection spheres 521, 531, the connection member and the wire, to shift gears.

The lever shaft 54 has an upper portion formed as an externally threaded portion 541. An operation knob 55 is screwed on the externally threaded portion 541. A driver can manually operate the lever member 50 while gripping the operation knob 55.

The upper support 60 is operable to press the ball seat 40 which is fitted into the ball-mounting cylinder 34 while receiving therein the ball portion 51, so as to retain the ball seat 40. The upper support 60 is also operable to press an upper surface of the ball portion 51 so as to prevent wobbling of the ball portion 51.

The upper support 60 will be more specifically described below, based on FIGS. 5A and 5B and with reference to FIGS. 1 to 4 as needed. FIGS. 5A and 5B illustrate one example of the upper support 60, wherein FIG. 5A is a partially cut-away perspective view of the upper support 60 when viewed obliquely from thereabove, and FIG. 5B is a perspective view of the upper support 60 when viewed obliquely from therebelow. In FIGS. 5A and 5B, the directions indicated by X and Y are defined in the same manner as that in FIG. 1 [i.e., X-X: lateral direction (- X: leftward direction, + X: rightward direction), and Y-Y: longitudinal direction (- Y: frontward direction, + Y: rearward direction)].

As shown in FIGS. 5A and 5B, the upper support 60 fundamentally comprises an inner tube 61, an outer tube 62 and an annular-shaped top plate 63, wherein the inner and outer tubes 61, 62 are integrally connected together by the annular-shaped top plate 63, and formed in a flat double-tube structure. The inner tube 61 is a region adapted to be internally fitted into the annular-shaped dam 37 of the base plate 30. The inner tube 61 has a funnel-shaped inner wall surface 611 formed to have an inner diameter dimension which gradually decreases in a direction from an upper opening to a lower opening thereof. The lever shaft 54 can be rotated about a center of the ball portion 51 within a space surrounded by the funnel-shaped inner wall surface 611. By contrast, the inner tube 61 has an outer peripheral surface formed to have approximately the same diameter dimension over the overall length in the heightwise direction.

The space surrounded by the funnel-shaped inner wall surface 611 is defined as a through-hole 612 which extends in the heightwise direction to allow the lever shaft 54 to be inserted thereinto.

The outer tube 62 is a region adapted to be externally fitted onto the annular-shaped dam 37 of the base plate 30. The outer tube 62 has a heightwise dimension set to be slightly less than that of the inner tube 61. Thus, in the configuration where the inner tube 61 is integrated with the outer tube 62 by the annular-shaped top plate 63, the inner tube 61 has a lower end located below a lower end of the outer tube 62. This setting is made for the following reason. When the upper support 60 is mounted to the base plate 30 by externally fitting the outer tube 62 onto the annular-shaped dam 37, the outer tube 62 is set at a position where a lower edge thereof is in contact with the flange 36. In this position, the lower end of the inner tube 61 is positioned below the flange 36. Thus, the inner tube 61 can reliably press the upper surface of the ball portion 51 supported inside the cylinder body 35.

The outer peripheral surface of the inner tube 61 and an inner peripheral surface of the outer tube 62 are arranged to define therebetween an annular-shaped space 64 for allowing the annular-shaped dam 37 of the base plate 30 to be inserted thereinto. The upper support 60 is mounted to the base plate 30 by inserting the annular-shaped dam 37 into the annular-shaped space 64.

The outer tube 62 has four lock protrusions (a second lock protrusion) 621 formed on a lower region of an inner wall surface thereof. Each of the lock protrusions 621 on the side of the upper support 60 is arranged correspondingly to a respective one of the four lock protrusions 371 formed to protrude from the outer peripheral surface of the annular-shaped dam 37. Respective positions and dimensions of the lock protrusions 621, 371 are set such that, when the upper support 60 after being externally fitted onto the annular-shaped dam 37 is turned about a cylinder axis of the ball-mounting cylinder 34 in a clockwise direction when viewed downwardly from thereabove, each of the lock protrusions 621 on the side of the upper support 60 is moved beneath a corresponding one of the lock protrusions 371 on the side of the base plate 30, in a sliding contact manner.

The outer tube 62 has a lock raised-ridge 622 formed on a rear region of the inner peripheral surface thereof in such a manner as to bulge inwardly. The lock raised-ridge 622 has a heightwise-long shape. The lock raised-ridge 622 is disposed at a position corresponding to the lock raised-ridge 372 formed to protrude from a rear region of the outer peripheral surface of the cylinder body 35. These lock raised-ridges 622, 372 have individual inclined surfaces adapted to be located in opposed relation to each other. Thus, when the upper support 60 after being externally fitted onto the cylinder body 35 is manually turned about the cylinder axis of the ball-mounting cylinder 34 in the clockwise direction, the respective inclined surfaces of the lock raised-ridges 622, 372 are brought into sliding contact with each other. Then, the outer tube 62 of the upper support 60 is elastically deformed radially outwardly, so that a mounted state of the upper support 60 relative to the cylinder body 35 is stabilized.

FIGS. 6A and 6B are explanatory top plan sectional views showing a positional relationship between the respective lock protrusions 371, 621 of the base plate 30 and the upper support 60, in an easy-to-understand manner, wherein FIG. 6A shows a state just before the lock protrusions 371, 621 are brought into engagement with each other, and FIG. 6B shows a state after the lock protrusions 371, 621 are brought into engagement with each other. In FIGS. 6A and 6B, the directions indicated by X and Y are defined in the same manner as that in FIG. 1 [i.e., X-X: lateral direction (- X: leftward direction, + X: rightward direction), and Y-Y: longitudinal direction (- Y: frontward direction, + Y: rearward direction)].

As shown in FIGS. 6A and 6B, the annular-shaped space 64 of the upper support 60 includes a narrow space 641 adapted to allow the annular-shaped dam 37 itself of the ball-mounting cylinder 34 to be fitted thereinto, and four broad spaces 642 each defined to have a groove width greater than that of the narrow space 641 and adapted to allow a corresponding one of the lock protrusions 371 on the side of the base plate 30 to be fitted thereinto. The four broad spaces 642 are disposed at respective positions corresponding to the lock protrusions 371.

The position and a circumferential length dimension of each of the broad spaces 642 are set to allow the upper support 60 in a state after a corresponding one of the lock protrusions 371 of the base plate 30 is fitted thereinto, to be turned about the cylinder axis of the ball-mounting cylinder 34 by a given angle (i.e., turnable angle θ; in this embodiment, θ ≅ 10°).

Specifically, in a state just after the upper support 60 is mounted to the cylinder body 35, a directional reference line L2 of the upper support 60 (hereinafter be referred to as "upper-support directional reference line L2") (the directional reference line means a line passing through a cylinder center O of the cylinder body 35 and extending in the longitudinal (i.e., Y-Y) direction) is inclined relative to a directional reference line L1 of the cylinder body 35 (hereinafter referred to as "cylinder-body directional reference line L1"), by the turnable angle θ in top plan view.

Thus, when the upper support 60 is externally fitted onto the annular-shaped dam 37, as shown in FIG. 6A, and then turned about the cylinder center O of the ball-mounting cylinder 34 in the clockwise direction by the turnable angle θ (about 10°), each of the lock protrusions 621 on the side of the upper support 60 is moved beneath a corresponding one of the lock protrusions 371 on the side of the base plate 30, in a sliding contact manner, as shown in FIG. 6B, so that the upper support 60 is prevented from being pulled out of the annular-shaped dam 37 of the base plate 30. In this state, the cylinder-body directional reference line L1 and the upper-support directional reference line L2 are aligned with each other, as shown in FIG. 6B.

In this embodiment, given that a curvature radius dimension of an inner peripheral surface of each of the lock protrusions 621 on the side of the upper support 60, which has a center located at the cylinder center O of the ball-mounting cylinder 34, is R1, a portion of the annular-shaped dam 37 located beneath each of the lock protrusions 371 on the side of the base plate 30 is formed such that an outer diameter dimension R2 of the portion gradually increases from the dimension R1 in the clockwise direction in FIGS. 6A and 6B.

Thus, when the upper support 60 is externally fitted onto the annular-shaped dam 37, as shown in FIG. 6A, and then turned about the cylinder center O in the clockwise direction, each of the lock protrusions 621 on the side of the upper support 60 is moved beneath a corresponding one of the lock protrusions 371 on the side of the base plate 30 while being in sliding contact with the annular-shaped dam 37, and simultaneously the inner surface of the lock protrusion 621 having the curvature radius dimension R1 is brought into sliding contact with the portion of the annular-shaped dam 37 having the outer diameter dimension R2 greater than the R1. Thus, a portion of the outer tube 62 located on an outward side of the broad space 642 is elastically deformed radially outwardly, and thereby the annular-shaped dam 37 is pressed by resulting reaction force from the portion of the outer tube 62. This pressing force makes it possible to stabilize the mounted state of the upper support 60 relative to the annular-shaped dam 37.

Further, the inner tube 61 of the upper support 60 has a retaining rib (retaining structure) 65 formed on a rear region of an inner lower edge thereof to extend in the lateral direction by given dimensions, as shown in FIG. 5B. A protruding amount of the retaining rib 65 from the inner tube 61 is set at a value which allows the retaining rib 65 to be brought into contact with an rear upper region of the outer surface of the ball portion 51 which is mounted in the ball-mounting cylinder 34 of the base plate 30 through the ball seat 40.

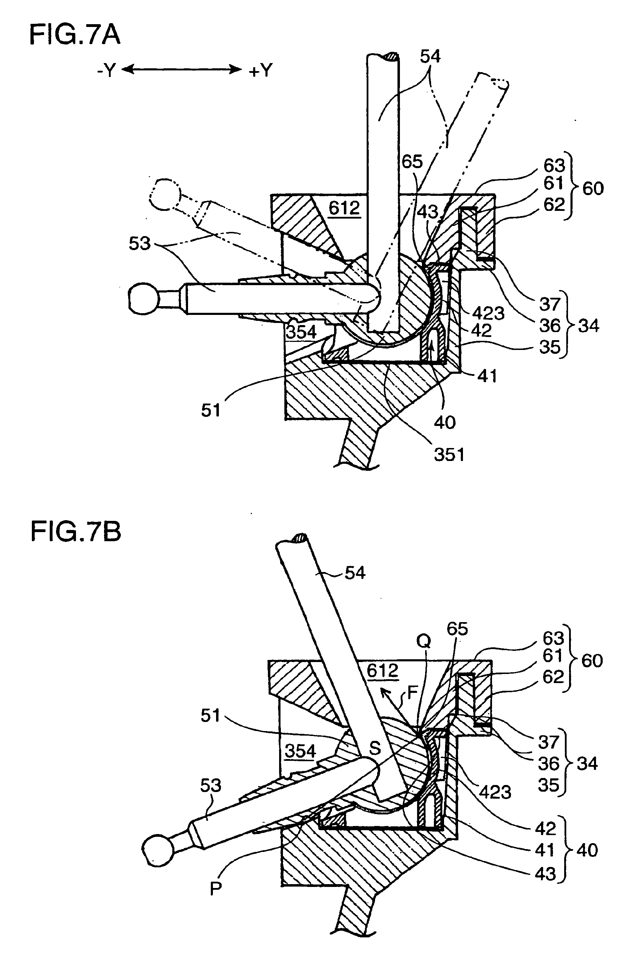

FIGS. 7A and 7B are explanatory diagrams showing a function of the retaining rib 65, wherein FIG 7A shows a state when the lever shaft 54 is set at a neutral position, and FIG 7B shows a state after the lever shaft 54 is tilted frontwardly. In FIGS. 7A and 7B, the directions indicated by Y are defined in the same manner as that in FIG. 1 [i.e., - Y: frontward direction, + Y: rearward direction].

As shown in FIG. 7A, in a state when the lever shaft 54 is set at a neutral position indicated by the solid line, the upper surface of the ball portion 51 is pressed by the lower edge of the inner tube 61 of the upper support 60, and the retaining rib 65 is in contact with the rear region of the upper surface of the ball portion 51. In this state, when a driver manually tilts the lever shaft 54 in the longitudinal or lateral direction while gripping the operation knob 55 (see FIG. 3), the ball portion 51 is rollingly moved inside the ball-mounting cylinder 34 to allow the lever shaft 54 to be tilted in the longitudinal or lateral direction. Thus, a given gear-shifting operation is smoothly performed.

If the lever shaft 54 in a rearwardly tilted position as indicated by the two-dot chain line in FIG. 7A is swiftly operated frontwardly, the second arm 53 will come into collision with a lower edge of the second cutout window 354 in the cylinder body 35 of the ball-mounting cylinder 34, as shown in FIG. 7B, to cause a swing movement of the ball portion 51 about the collision point of the second arm 53 serving as a support point P, in a counterclockwise direction.

In this case, given that an upper edge of the embracing piece 42 on a rearward side of the ball seat 40 is an action point Q, and a distance between the support point P and the action point Q and a pressing force of the outer surface of the ball portion 51 against the retaining rib 65 are S and F, respectively, the following moment M is applied to the retaining rib 65.

$$M = F \times S$$

This moment M will be reliably received by the retaining rib 65 of the upper support 60. Thus, if the upper support 60 is devoid of the retaining rib 65, the ball portion 50 is liable to have a movement causing pull-out thereof from the ball seat 40, which leads to wobbling of the lever member 50.

In this embodiment, the retaining rib 65 is formed in the rear region of the lower edge of the inner tube 61 of the upper support 60, and brought into contact with the outer surface of the ball portion 51. Thus, the ball portion 51 is stopped by the retaining rib 65 to prevent the occurrence of an undesirable situation where it is pulled out of the ball seat 40.

As described above in detail, the shift lever apparatus 20 according to the above embodiment, includes the base plate 30 adapted to be fixed to the floor 12 of the vehicle 10, the ball-mounting cylinder 34 formed on the top of the base plate 30, the ball seat 40 adapted to be mounted in the ball-mounting cylinder 34 via an upper opening of the ball-mounting cylinder 34, the ball portion 51 adapted to be mounted in the ball seat 40 in an embraced manner, the shift lever 54 erected to extend radially from the ball portion 51, and the upper support 60 adapted to retain the ball portion 51 via the ball seat 51 while being mounted to an upper edge portion of the ball-mounting cylinder 34.

Thus, when the ball portion 51 is fitted into the ball-mounting cylinder 34 through the ball seat 40, the lever shaft 54 is mounted to the base plate 30 through the ball portion 51. Then, when the upper support 60 is mounted to the ball-mounting cylinder 34, the ball portion 60 is retained inside the ball-mounting cylinder 34 by the upper support 60.

The ball seat 40 comprises the plurality of embracing pieces 42 each formed to have a curved inner surface conforming to an outer surface of the ball portion 51, and arranged in adjacent relation to each other with a given slit therebetween while defining a concave spherical-shaped surface conforming to the outer surface of the ball portion 51, in their entirety. Thus, in a process of mounting the ball portion 51 into the ball seat 40, the ball portion 51 can be readily embraced by the plurality of embracing pieces 42, while broadening the embracing pieces 42. In addition, the reinforcing rib 423 is formed on the outer surface of each of the embracing pieces 42 to extend in parallel relation to the slit. Thus, after the ball portion 51 is embraced by the plurality of embracing pieces 42 which are once broadened based on elastic deformation of an base end of each of the embracing pieces 42, the ball portion 51 will be reliably embraced by the embracing pieces 42 each having shape-retainability ensured by the reinforcing rib 423.

In this embodiment, dimensions of each of the reinforcing ribs 423 are set such that, when the ball seat 40 is fitted into the ball-mounting cylinder 34, each of the reinforcing ribs 423 is brought into contact with an inner peripheral surface of the ball-mounting cylinder 34. That is, when the ball seat 40 is fitted in the ball-mounting cylinder 34, the reinforcing rib 423 is in contact with the inner peripheral surface of the ball-mounting cylinder 34. Thus, the contact can eliminate a risk of undesirable broadening of the embracing pieces 42. This allows the ball portion 51 to be reliably embraced by the plurality of embracing pieces 42 in a stable manner.

In this embodiment, the ball-mounting cylinder 34 has the peripheral-wall ribs 352a formed on the inner peripheral surface thereof and each adapted to be fitted into a corresponding one of the slits 424. Thus, when the ball seat 40 is fitted into the ball-mounting cylinder 34 of the base plate 30, the peripheral-wall ribs 352a formed on the inner peripheral surface of the ball-mounting cylinder 34 is fitted into the slit 424 defined between respective adjacent ones of the embracing pieces 42. Therefore, even if the ball portion 51 is rotated in conjunction of the longitudinally or laterally tilting operation of the lever shaft 54, the peripheral-wall ribs 352a can block movement of the embracing pieces 42 and prevent deformation of the embracing pieces 42. This makes it possible to allow the ball portion 51 to be reliably embraced by the ball seat 40 in a stable manner.

It is understood that the present invention is not limited to the above embodiment. For example, the above embodiment may be modified as follows.

Although the above embodiment has been described by taking a manual transmission shift lever apparatus as an example, the present invention is not limited to the manual transmission shift lever apparatus, but may be an automatic transmission shift lever apparatus.

In the above embodiment, a portion of the annular-shaped dam 37 located beneath each of the lock protrusions 371 is formed to have an outer diameter dimension which gradually increases from R1 to R2 in a direction allowing the upper support 60 to be locked, so as to stabilize the mounted state of the upper support 60 relative to the annular-shaped dam 37, based on a pressing force arising from elastic deformation of the outer tube 62 caused when the upper support 60 is manually turned, as shown in FIG. 6A. Alternatively, at least one of a lower surface of each of the lock protrusions 371 on the side of the base plate 30 and an upper surface of a corresponding one of the lock protrusions 621 on the side of the upper support 60 may be formed as an inclined surface to allow at least one of the corresponding lock protrusions 371, 621 to have a heightwise dimension which gradually increases in the direction allowing the upper support 60 to be locked. In this case, when the upper support 60 is fitted onto the annular-shaped dam 37 and turned in the clockwise direction about the cylinder axis (cylinder center O), the lock protrusion 621 on the side of the upper support 60 is moved beneath the lock protrusion 371 on the side of the base plate 30 while being guided by the inclined surface, for example, of the lock protrusion 371, in such a manner as to be struck against the inclined surface. This makes it possible to stabilize the mounted state of the upper support 60 relative to the base plate 30.

In the above embodiment, a space (recess or groove) for fittingly receiving the reinforcing rib 423 formed on the outer surface of each of the embracing pieces 42 may be formed in the base plate (specifically, an inner surface of the cylinder body 35 of the ball-mounting cylinder 34). The space makes it possible to reliably prevent deformation of each of the embracing pieces 42 mounted to the ball-mounting cylinder 34.

While the shift lever apparatus 20 according to the above embodiment is applied to the vehicle 10 with a right-hand steering wheel, a target vehicle of the present invention is not limited to the vehicle 10 with a right-hand steering wheel, but may be a vehicle with a left-hand steering wheel.

[Summary of the Embodiment]

The above embodiment is summarized as follows.

(1) In the shift lever apparatus according to the above embodiment, when the ball portion is fitted into the ball-mounting cylinder through the ball seat, the lever shaft is mounted to the base plate through the ball portion. Then, when the upper support is mounted to the ball-mounting cylinder, the ball portion is retained inside the ball-mounting cylinder by the upper support. The ball seat comprises the plurality of embracing pieces arranged in adjacent relation to each other with the given slit therebetween and formed to have a concavely curved surface conforming to the outer surface of the ball portion. Thus, in a process of mounting the ball portion into the ball seat, the ball portion can be readily embraced by the plurality of embracing pieces, while broadening the embracing pieces. In addition, the shift lever apparatus includes deformation restriction means adapted to restrict deformation of the embracing pieces so as to provide enhanced holdability or supportability for the ball portion to prevent deterioration in operability of the shift lever.

(2) In the above shift lever apparatus, the deformation restriction means includes a reinforcing first rib formed on an outer surface of each of the embracing pieces to extend in parallel relation to the slit.

According to this feature, after the ball portion is embraced by the plurality of embracing pieces which are once broadened based on elastic deformation of an base end of each of the embracing pieces, the ball portion will be stably embraced by the embracing pieces each having shape-retainability ensured by the first rib.

(3) Preferably, in the above shift lever apparatus, the first rib may be adapted to be brought into contact with an inner peripheral surface of the ball-mounting cylinder in a state after the ball seat is fitted into the ball-mounting cylinder.

According to this feature, when the ball seat is fitted in the ball-mounting cylinder, the reinforcing rib is in contact with the inner peripheral surface of the ball-mounting cylinder. Thus, the contact can eliminate a risk of undesirable broadening of the embracing pieces, and allows the ball portion to be reliably embraced by the plurality of embracing pieces in a stable manner.

(4) Preferably, in the above shift lever apparatus, the deformation restriction means may include a second rib which is formed on an inner peripheral surface of the ball-mounting cylinder, and adapted to be fitted into the slit in such a manner as to maintain a width of the slit to restrict deformation of the embracing pieces.

According to this feature, when the ball seat is fitted into the ball-mounting cylinder of the base plate, the second rib formed on the inner peripheral surface of the ball-mounting cylinder is fitted into the slit defined between respective adjacent ones of the embracing pieces. Thus, the second rib can block movement of the embracing pieces and prevent deformation of the embracing pieces. This makes it possible to allow the ball portion to be reliably embraced by the ball seat.

(5) In the shift lever apparatus according to the above embodiment, the ball-mounting cylinder has slit-deformation restriction means which is formed on an inner peripheral surface thereof, and adapted to maintain a width of the slit so as to restrict deformation of the embracing pieces.

Thus, when the ball seat is fitted into the ball-mounting cylinder of the base plate, the slit-deformation restriction means restricts deformation of the slit defined between respective adjacent ones of the embracing pieces. This makes it possible to allow the ball portion to be reliably embraced by the ball seat in a stable manner.

(6) Preferably, in the above shift lever apparatus, the slit-deformation restriction means is a second rib which is formed on the inner peripheral surface of the ball-mounting cylinder, and adapted to be fitted into the slit.

According to this feature, when the ball seat is fitted into the ball-mounting cylinder of the base plate, the second rib of the ball-mounting cylinder is fitted into the slit defined between respective adjacent ones of the embracing pieces. Thus, the second rib can block movement of the embracing pieces and prevent deformation of the embracing pieces. This makes it possible to allow the ball portion to be reliably embraced by the ball seat.

As mentioned above, in the shift lever apparatus according to the above embodiment, the ball seat adapted to embrace the ball portion comprises the plurality of embracing pieces arranged in adjacent relation to each other with the given slit therebetween and each formed to have a concavely curved surface conforming to the outer surface of the ball portion. Thus, in a process of mounting the ball portion into the ball seat, the ball portion can be readily embraced by the plurality of embracing pieces, while broadening the embracing pieces.

In addition, the shift lever apparatus includes the deformation restriction means adapted to restrict deformation of the embracing pieces. Thus, the embracing pieces after embracing the ball portion can have assured shape-retainability to reliably continue the embracing of the ball portion.

Further, when the ball seat is fitted into the ball-mounting cylinder of the base plate, the slit-deformation restriction means can maintain a width of the slit defined between respective adjacent ones of the embracing pieces, to restrict deformation of the embracing pieces. This makes it possible to allow the ball portion to be reliably embraced by the ball seat.

### Claims

1.  A shift lever apparatus for a vehicle comprising:

    a base plate (30) adapted to be fixed to a vehicle body (12);
    a ball-mounting cylinder (34) formed on a top of said base plate (30) to have an upper opening;
    a ball seat (40) adapted to be mounted in said ball-mounting cylinder (34) via said upper opening;
    a ball portion (51) adapted to be mounted in said ball seat (40);

a lever shaft (54) erected to extend radially from said ball portion (51);
an upper support (60) adapted to retain said ball portion (51) through said ball seat (40) while being mounted to an upper edge portion (37) of said ball-mounting cylinder (34);
a plurality of embracing pieces (42) formed in said ball seat (40), said embracing pieces (42) arranged in adjacent relation to each other with a given slit (424) therebetween, each of said embracing pieces (42) having a concavely curved inner surface conforming to an outer surface of said ball portion (51); and
deformation restriction means adapted to restrict deformation of said embracing pieces (42), **characterized in that** said deformation restriction means includes a reinforcing first rib (423) formed on an outer surface of each of said embracing pieces (42) to extend in parallel relation to said slit (424).

2.  The shift lever apparatus as defined in claim 1, **characterized in that** said first rib (423) is adapted to be brought into contact with an inner peripheral surface of said ball-mounting cylinder (34) in a state after said ball seat (40) is fitted into said ball-mounting cylinder (34).

3.  The shift lever apparatus as defined in claim 1 or 2, **characterized in that** said deformation restriction means includes a second rib (352a) which is formed on an inner peripheral surface of said ball-mounting cylinder (34), and adapted to be fitted into said slit (424) in such a manner as to maintain a width of said slit (424) to restrict deformation of said embracing pieces (42).

### Patentansprüche

1.  Schalthebelvorrichtung für ein Fahrzeug, die Folgendes umfasst:

    eine Bodenplatte (30), die dazu angepasst ist, an einen Fahrzeugaufbau (12) montiert zu werden;
    einen Kugelbefestigungszylinder (34), der an einer Oberseite der genannten Bodenplatte (30) gebildet wird, um eine obere Öffnung aufzuweisen;
    einen Kugelsitz (40), der dazu angepasst ist, im genannten Kugelbefestigungszylinder (34) durch die genannte obere Öffnung montiert zu werden;
    einen Kugelabschnitt (51), der dazu angepasst ist, im genannten Kugelsitz (40) montiert zu werden;
    einen Schalthebel (54), der aufrecht steht, um radial ausgehend vom genannten Kugelabschnitt (51) zu verlaufen;

einen oberen Träger (60), der dazu angepasst ist, den genannten Kugelabschnitt (51) durch den genannten Kugelsitz (40) zurückzuhalten, während er an einem oberen Randabschnitt (37) des genannten Kugelbefestigungszylinders (34) montiert ist;

eine Vielzahl an umgreifenden Teilen (42), die im genannten Kugelsitz (40) gebildet werden, wobei die genannten umgreifenden Teile (42) benachbart zueinander mit einem dazwischenliegenden gegebenen Schlitz (424) angeordnet sind, wobei jedes der umgreifenden Teile (42) eine konkav kurvenförmige innere Oberfläche aufweist, die einer äußeren Oberfläche des genannten Kugelabschnitts (51) entspricht, und ein Deformationseinschränkungsmittel, das dazu angepasst ist die Deformation der genannten umgreifenden Teile (42) einzuschränken, **dadurch gekennzeichnet, dass** das genannte Deformationseinschränkungsmittel eine erste Verstärkungsrippe (423) umfasst, die auf einer äußeren Oberfläche der genannten umgreifenden Teile (42) gebildet wird, um in paralleler Anordnung zum genannten Schlitz (424) zu verlaufen.

**2.** Die Schalthebelvorrichtung nach Anspruch 1, **dadurch gekennzeichnet, dass** die genannte erste Rippe (432) dazu angepasst ist, mit einer inneren peripheren Oberfläche des genannten Kugelbefestigungszylinders (34) in einem Zustand in Kontakt gebracht zu werden, nachdem der genannte Kugelsitz (40) in den genannten Kugelbefestigungszylinder (34) eingesetzt ist.

**3.** Die Schalthebelvorrichtung nach Anspruch 1 oder 2, **dadurch gekennzeichnet, dass** das genannte Deformationseinschränkungsmittel eine zweite Rippe (352a) umfasst, die an einer inneren peripheren Oberfläche des genannten Kugelbefestigungszylinders (34) gebildet wird, und dazu angepasst ist in den genannten Schlitz (424) derart eingesetzt zu werden, dass die Breite des genannten Schlitzes (424) erhalten wird, um eine Deformation der genannten umgreifenden Teile (42) einzuschränken.

**Revendications**

**1.** Dispositif de levier de vitesses pour un véhicule, comprenant :

une plaque de base (30) adaptée de manière à être fixée à une carrosserie (12) ;
un cylindre montage de boule (34) formé à un sommet de la dite plaque de base (30) pour présenter une ouverture supérieure ;
un siège de boule (40) adapté de manière à être monté dans le dit cylindre montage de boule (34) via la dite ouverture supérieure ;
une portion de boule (51) adaptée de manière à être montée dans le dit siège de boule (40) ;
un levier de vitesses (54) érigé pour s'étendre en direction radiale à partir de la dite portion de boule (51) ;
un support supérieur (60) adapté de manière à retenir la dite portion de boule (51) au moyen du dit siège de boule (40), tout en étant monté à une portion de bord supérieur (37) du dit cylindre montage de boule (34) ;
une pluralité de pièces d'étreinte (42) formée dans le dit siège de boule (40), les dites pièces d'étreinte (42) étant disposées à proximité l'une par rapport à l'autre avec une certaine fente (424) intermédiaire, chacune des dites pièces d'étreinte (42) présentant une surface intérieure courbée de façon concave conformément à une surface extérieure de la dite portion de boule (51) ; et
un moyen de limitation de déformation adapté de manière à limiter la déformation des dites pièces d'étreinte (42), **caractérisé en ce que** le dit moyen de limitation de déformation comprend une première nervure de renforcement (423) formée sur une surface extérieure de chacune des dites pièces d'étreinte (42) pour s'étendre parallèlement par rapport à la dite fente (424).

**2.** Le dispositif de levier de vitesses d'après la revendication 1, **caractérisé en ce que** la dite première nervure (423) est adaptée de manière à être mis en contact avec une surface intérieure périphérique du dit cylindre montage de boule (34) dans un état qui fait suite à l'insertion du dit siège de boule (40) dans le dit cylindre montage de boule (34).

**3.** Le dispositif de levier de vitesses d'après la revendication 1 ou 2, **caractérisé en ce que** le dit moyen de limitation de déformation comprend une deuxième nervure (352a), qui est formée sur une surface intérieure périphérique du dit cylindre montage de boule (34) et adaptée de manière à être insérée dans la dite fente (424) de façon à préserver une largeur de la fente (424) nommée pour limiter la déformation des dites pièces d'étreinte (42).

# FIG.1

EP 2 009 326 B1

# FIG.2

# FIG.3

# FIG.4

-Y ←——→ +Y

# FIG.5A

# FIG.5B

## FIG.6A

## FIG.6B

## FIG.7A

-Y ←——→ +Y

## FIG.7B

# FIG.8A

# FIG.8B

# FIG.8C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7332476 A
- JP 2003118412 A